# FASCICULE DE BREVET EUROPEEN

(11) **EP 1 024 310 B1**
(45) Date de publication et mention de la délivrance du brevet: **03.09.2003**
(21) Numéro de dépôt: 00101413.3
(22) Date de dépôt: 25.01.2000
(51) Int. Cl.: F16D 69/04, F16D 69/00, F16D 65/12

(54) **Dispositif mettant en oeuvre un frottement en milieu liquide et comportant une garniture de frottement à porosité contrôlée**
Reibwerkstoff für Nasslaufkupplungen, mit kontrollierter Porosität
Wet clutch device comprising friction material with controlled porosity

(30) Priorité: 29.01.1999 FR 9901198
(43) Date de publication de la demande: 02.08.2000
(73) Titulaire: Valeo Matériaux de Friction, 87020 Limoges cedex 9 (FR)
(72) Inventeur: Duno, Erick, 87100 Limoges (FR); Pantier, Philippe, 87240 Ambazac (FR); Boutaud, Jean-Pierre, 87250 Panazol (FR); Boulé, Philippe, 87570 Rilhac-Rancon (FR); Skotnicki, George, Rochdale, Lancs 0420 PR (GB)
(74) Mandataire: Lemaire, Marc

(56) Documents cités:
- EP-A- 0 681 116
- EP-A- 0 867 634
- FR-A- 2 760 504
- US-A- 4 941 559
- US-A- 5 566 802
- US-A- 5 842 551

## Description

La présente invention concerne un dispositif mettant en oeuvre un frottement en milieu liquide tel que, plus particulièrement, un disque d'embrayage ou de frein, notamment de boîte de vitesses automatique ou y associé, ou tel qu'un embrayage de pontage, communément appelé LOCK-UP, ou tel qu'un anneau ou cône de synchronisation de boîte de vitesses qui porte une garniture de frottement de forme générale annulaire plate destinée à équiper un dispositif mettant en oeuvre un frottement en milieu liquide.

La garniture de frottement se présente sous la forme d'un anneau plat ou d'un tronc de cône et le dispositif qui en est équipé est un disque d'embrayage ou de frein, notamment de boîte de vitesses automatique et y associé, fonctionnant dans l'huile, ou un anneau ou cône de synchronisation de boîte de vitesses à commande manuelle ou robotisée fonctionnant également dans l'huile, un tel dispositif étant installé à bord d'un véhicule automobile.

Bien entendu le dispositif peut comporter plusieurs disques d'embrayage ou frein comme décrit dans le document US-A-5,566,802.

L'invention concerne par exemple un dispositif équipé d'une garniture de frottement du type réalisé à partir d'un matériau de frottement constitué par un mat de fibres imprégné d'une résine thermodurcissable et dont le procédé de fabrication comporte une étape finale de cuisson, associée à une opération de moulage ou de surmoulage, au cours de laquelle on exerce une mise sous pression de l'ébauche annulaire de la garniture préalablement réalisée à partir du mat de fibres imprégné.

La composition et la structure d'un matériau de frottement constitué par un mat de fibres imprégné d'une résine de type thermodurcissable sont décrites en détail dans le document WO-A-95/26.473.

Ce document mentionne notamment les avantages structurels et de mise en oeuvre d'un tel type de matériau par rapport aux matériaux de l'état de la technique, et notamment par rapport au matériau de type "papier" qui sont constitués essentiellement de fibres de cellulose qui sont obtenues par voie humide selon un procédé usuel de fabrication de papier, c'est-à-dire en procédant à une dispersion de fibres cellulosiques dans une solution aqueuse contenant une résine, puis un essorage et un séchage.

On pourra aussi se reporter au contenu détaillé de ce document dans le cadre de la mise en oeuvre d'un tel matériau pour la réalisation d'une garniture de frottement sur un dispositif conforme aux enseignements de l'invention.

Ce type de matériau non tissé, faisant appel à un procédé à sec, comparé au procédé humide mis en oeuvre pour l'obtention d'un matériau de type papier, a pour avantage structurel d'être poreux et de comporter des porosités de taille importante comprises entre 50 et 500 micromètres et qui sont communicantes entre elles, tandis que les papiers ont des porosités de petite taille comprises entre 5 et 50 micromètres et qui ne sont pas communicantes.

La notion de porosité communicante est une notion relative, c'est-à-dire qu'elle doit être appréciée par rapport au liquide dans lequel est immergée la garniture de frottement, c'est-à-dire plus particulièrement l'huile d'une transmission.

En effet, l'huile ne traverse pas un matériau de type papier tandis qu'elle traverse le matériau de frottement poreux réalisé conformément aux enseignements du document WO-A-95/26.473.

La porosité de ce type de matériau permet ainsi la circulation de l'huile à l'intérieur même de la garniture de frottement, et notamment depuis son diamètre intérieur vers son diamètre extérieur et réciproquement, ce qui permet d'évacuer de manière très efficace la chaleur produite lors du frottement de la garniture et d'éviter ainsi des élévations de température qui pourraient dégrader le matériau de frottement, l'huile ou le système en général auquel est incorporé l'embrayage équipé d'une telle garniture.

Une telle caractéristique avantageuse est particulièrement intéressante dans les systèmes à glissement contrôlé ou continu et dans les embrayages.

Par contre, cette circulation interne d'huile dans la garniture peut être néfaste dans des systèmes tels que des dispositifs appelés LOCK-UP dans lesquels la garniture de frottement doit aussi jouer un rôle de joint d'étanchéité afin d'éviter l'apparition de contre-pressions dans la chambre de LOCK-UP aboutissant à une chute de la capacité de transmission en couple.

On a déjà proposé dans le document FR-A-2.760.504 un perfectionnement à une garniture de frottement faisant appel à un matériau du type mentionné précédemment afin de pouvoir utiliser ce type de matériau dans différents types de systèmes en maîtrisant parfaitement l'écoulement du liquide.

Ce document propose une garniture de frottement du type dans lequel le procédé de fabrication de la garniture de frottement comporte une étape de moulage, ou de surmoulage, et de cuisson dans un moule sous pression, et du type qui comporte des zones de porosités différentes et contrôlées.

Conformément aux enseignements de ce document, le fait de pouvoir contrôler la porosité du matériau de frottement en tous points de la garniture, ou dans des zones déterminées de cette dernière, permet de contrôler le débit d'huile à l'intérieur de la garniture, voire le supprimer, tout en conservant les propriétés tribologiques de la garniture de frottement.

Selon d'autres enseignements de ce document, la garniture comporte au moins une zone annulaire de porosité contrôlée inférieure, c'est à dire une densité supérieure, à la porosité moyenne du corps en matériau de frottement constituant la garniture, la zone annulaire à porosité contrôlée étant constituée par exemple par un chanfrein périphérique agencé à l'un des bords périphériques, intérieur ou extérieur, de la garniture, ou étant obtenue grâce à un insert annulaire concentrique, notamment à structure imperméable, dont l'épaisseur est inférieure à l'épaisseur moyenne de la garniture annulaire plate, la portion annulaire en vis-à-vis du matériau constitutif du corps de la garniture de frottement présentant une porosité contrôlée inférieure à la porosité moyenne du matériau de frottement.

Cette solution est notamment satisfaisante dans le cas des dispositifs appelés LOCK-UP dans lesquels la zone de porosité inférieure permet de "bloquer" la circulation de l'huile à l'intérieure de la garniture.

Dans le document EP-A-0867,634 la variation de porosité est obtenue à l'aide d'un support poreux. Cette solution n'est pas économique à cause de la constitution du support à base de carbone.

L'invention a pour but de proposer une solution économique permettant d'améliorer la circulation de l'huile dans la garniture de frottement et d'améliorer la répartition des contraintes et des déformations dans le matériau de frottement.

Dans ce but, l'invention propose un dispositif du type mentionné précédemment, comportant un support imperméable au liquide, notamment métallique, dont une surface d'interface forme support pour une garniture de frottement, réalisée à partir d'un matériau de frottement qui présente une structure poreuse à cellules communicantes et qui comporte des zones de porosités différentes et contrôlées, et du type dans lequel le procédé de fabrication de la garniture de frottement comporte une étape de moulage sous pression, caractérisé en ce que la surface d'interface du support comporte au moins une rainure dans laquelle s'étend le matériau de frottement moulé sous pression pour constituer une zone de porosité contrôlée supérieure à la porosité moyenne du corps en matériau de frottement constituant la garniture, notamment pour former un canal de circulation de l'huile à l'intérieur de la garniture de frottement.

Grâce à l'invention une meilleure liaison est obtenue entre la garniture de frottement et son support. Une meilleure tenue mécanique est ainsi obtenue, notamment aux effets de la force centrifuge. Un bon drainage de l'huile est obtenu.

Selon d'autres caractéristiques de l'invention :
- la profondeur moyenne de la rainure est comprise entre 10% et 50% de l'épaisseur moyenne de la garniture annulaire plate ;
- la rainure est telle qu'elle présente une section, transversale à sa direction générale, qui est perpendiculaire au sens de cisaillement du matériau de frottement lors de l'utilisation du dispositif ;
- au moins une partie de la surface d'interface n'est pas parallèle à la surface active de frottement de la garniture ;
- le support est globalement en forme d'anneau plat et en ce que la surface d'interface est de profil tronconique et en ce que la surface active de frottement n'est pas parallèle à la surface d'interface tronconique de manière à constituer une zone annulaire de porosité contrôlée inférieure à la porosité moyenne du corps en matériau de frottement constituant la garniture ;
- la surface d'interface est constituée par le fond d'une rainure annulaire de grande largeur formée dans une face latérale du support annulaire plat ;
- la surface d'interface tronconique comporte au moins une rainure de faible largeur dans laquelle s'étend le matériau de frottement moulé sous pression ;
- le matériau de frottement est constitué par un mat de fibres imprégné d'une résine thermodurcissable ;
- la taille des cellules communicantes est comprise entre 50 et 500 micromètres ;
- la porosité du matériau de frottement est inférieure à 60% ;
- la surface active de frottement de la garniture comporte un réseau de rainures permettant une meilleure circulation de l'huile entre la garniture de frottement et une surface de réaction avec laquelle coopère le dispositif.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un premier exemple d'un support métallique en forme de disque constituant par exemple un piston de lock-up comportant un premier exemple de rainure de drainage conforme aux enseignements de l'invention et qui est représenté avant l'opération de moulage sous pression de la garniture de frottement ;
- la figure 2 est une vue similaire à celle de la figure 1 sur laquelle est représenté un deuxième exemple de réalisation d'une rainure de drainage ;
- la figure 3 est une vue schématique à plus grande échelle et en section transversale par un plan radial du support métallique de la figure 1 qui est représenté après le moulage de la garniture de frottement ;
- la figure 4 est une vue similaire à celle de la figure 1 qui illustre un autre exemple de réalisation du support métallique d'un disque de lock-up après une première étape au cours de laquelle on a réalisé une rainure de grande largeur à fond tronconique ;
- la figure 5 est une vue similaire à celle de la figure 3 après réalisation d'une rainure de drainage de faible largeur dans le fond de la rainure tronconique ;
- la figure 6 est une vue schématique en section transversale par un plan radial et à plus grande échelle, du disque de la figure 4 avant le moulage de la garniture de frottement ;
- la figure 7 est une vue similaire à celle de la figure 6 qui représente le disque après surmoulage de la garniture de frottement ;
- les figures 8 à 10 sont trois vues similaires qui représentent trois exemples de réalisation de rainures de drainage dans la surface latérale tronconique interne du support métallique annulaire constituant le corps d'une bague de synchronisation, représenté de manière schématique ;
- la figure 11 est une vue similaire à celle de la figure 7 qui représente la bague de synchronisation après le surmoulage de la garniture de friction ;
- la figure 12 est une vue de détail à plus grande échelle selon la flèche F12 de la figure 11 ; et
- la figure 13 est une vue schématique en section transversale par un plan radial qui illustre une autre conception d'une bague de synchronisation conformément aux enseignements de l'invention.
- la figure 14 représente les variations du module d'Young du matériau de frottement en fonction des contraintes rencontrées lors de l'utilisation du dispositif ;
- la figure 15 est une vue partielle en coupe axiale d'un appareil d'accouplement hydrocinétique équipé d'un disque de friction selon l'invention.

Dans la description qui va suivre, des composants et des éléments identiques, similaires ou analogues seront désignés par les mêmes chiffres de référence.

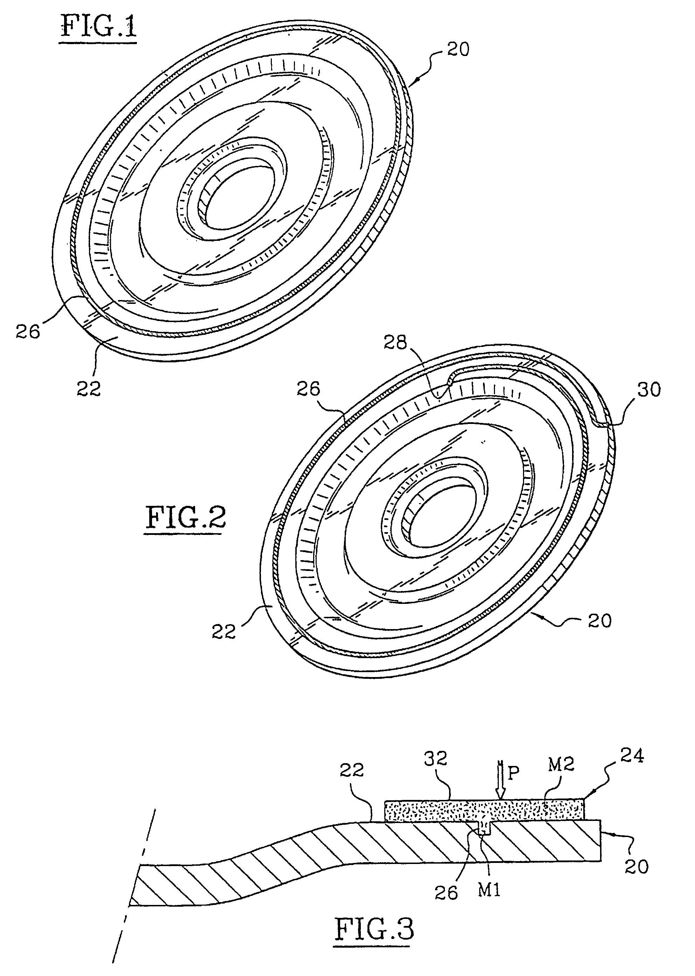

On a représenté à la figure 1 une pièce, ici le piston d'un embrayage de verrouillage ou de pontage appelé «Lock-Up», d'un appareil d'accouplement hydrocinétique, formant support métallique 20 en forme générale de disque qui est délimitée par au moins une face latérale annulaire plane 22 prévue pour recevoir une garniture de frottement 24 (voir figure 3) constituée par un mat de fibres imprégné d'une résine thermodurcissable.

La garniture est en matériau non tissé comportant des fibres.

Pour plus de précisions, on se reportera au document WO-A-95/26473 ou à son correspondant US-A-5,807,518.

Ainsi les fibres sont des fibres longues de longueur comprise par exemple entre 15mm et 120mm.

Les fibres sont choisies parmi le groupe des fibres de verre, de coton, de céramique, de polyacrylonitrile notamment préoxydées.

Des charges poudreuses sont incorporées au mat. Celles-ci comprennent tout ou partie des éléments ou composés suivants : cuivre, laine de roche, carbone (coke et/ou fibres de carbones réduites en poudre, graphite), silicate de zirconium, sulfure de fer, alumine, latex.

La résine thermodurcissable comporte un solvant polaire, de préférence aqueux. Cette résine est par exemple à base de résol. Elle est par exemple additionnée de latex.

Les fibres sont mélangées puis cardées pour former un voile cardé sur lequel sont saupoudrées des charges. Ensuite on nappe le voile puis éventuellement on effectue une opération d'aiguilletage pour obtenir un mat de non tissé aiguilleté.

Ensuite on effectue une opération d'imprégnation dans un bain contenant une ou des résines de type thermodurcissable en solution ou dispersée dans le bain.

On effectue ensuite une étape finale de cuisson associée à une opération de moulage ou de surmoulage au cours de laquelle on exerce une mise sous pression. La cuisson assure l'adhésion de la garniture de frottement 24 au support 20.

Lors de cette étape il est fait appel à un piston dont le déplacement est limité pour obtenir la porosité souhaitée.

La garniture est pressée par le piston au contact du support et épouse donc bien la forme de celui-ci. Un bon accrochage de la garniture à son support est obtenue.

La garniture a ainsi un coefficient de frottement important et stable, une résistance importante à l'échauffement sous des pressions de travail élevées, et une bonne résistance à l'usure.

Conformément aux enseignements de l'invention, la face latérale 22 qui constitue ici la face d'interface avec la garniture 24 au sens de l'invention comporte au moins une rainure 26.

Dans le mode de réalisation de la figure 1, la rainure 26 est fermée en boucle et est ici constituée par une rainure circulaire fermée et excentrée par rapport à l'axe du disque 20, et donc par rapport à la surface annulaire 22.

En variante la rainure 26 est de forme oblongue, par exemple en forme d'ellipse. Plusieurs rainures 26 peuvent être prévues. Par exemple à la figure 1 une autre rainure concentrique peut être prévue à I 'intérieur de la rainure 26.

Dans la variante de réalisation illustrée à la figure 2, la rainure 26 n'est pas fermée en boucle mais elle débouche au contraire radialement vers l'intérieur et vers l'extérieur par ses extrémités 28 et 30.

Bien entendu plusieurs rainures 26 de longueur plus courtes peuvent être prévues, chaque rainure débouchant par ses extrémités radialement vers l'extérieur et vers l'intérieur.

Dans tous les cas le support 20 est en matière imperméable au liquide, ici de l'huile, contenue dans l'appareil d'accouplement hydrocinétique. Il est donc économique en étant ici métallique. Le support 20 équipé de sa garniture constitue ici un disque d'embrayage.

Selon une conception générale connue, la garniture de frottement 24 se présente sous la forme d'un anneau plat, par exemple continu, d'épaisseur moyenne constante qui délimite une face latérale annulaire plane active de frottement 32 prévue pour coopérer avec une face correspondante d'un organe de réaction (non représenté).

De manière précitée, la garniture de frottement 24 est posée et fixée sur la surface d'interface 22 lors d'une opération de moulage et de cuisson sous pression au cours de laquelle un élément du moule (non représenté) exerce un effort de pression P selon une direction globalement perpendiculaire au plan de la surface 22.

Du fait de la présence de la rainure 26, une partie du matériau de frottement, qui constitue la garniture 24, pénètre dans la ou les rainures 26 du support 20 plus rigide que la garniture.

Du fait de l'application d'un effort P de moulage, la pénétration du matériau de frottement dans la rainure 26 aboutit, conformément aux enseignements de l'invention, à une densité plus faible de matériau M1 reçu dans la rainure 26 et juste au dessus de cette dernière, par rapport à -la densité moyenne constante du reste M2 du matériau de la garniture 24.

La densité inférieure M1 du matériau aboutit donc à une porosité supérieure de ce matériau par rapport à la porosité moyenne du matériau M2.

Grâce à la présence de la rainure 26, la porosité du matériau est contrôlée lors du moulage en permettant ainsi de disposer au droit de la rainure 26 d'une porosité accrue de 10 à 50% par rapport à la porosité moyenne du matériau M2. La rainure 26 est ainsi une rainure de drainage.

Plus précisément, on obtient ainsi un canal interne à la garniture de frottement 24 qui permet un passage préférentiel de l'huile sous la garniture de frottement 24 en créant ainsi un réseau de drainage de l'huile permettant d'augmenter les débits de lubrifiant.

Bien entendu ce drainage est augmenté lorsque plusieurs rainures sont prévues.

Les échanges thermiques à la surface active 32 de la garniture de frottement sont ainsi augmentées de manière importante, de même que la tenue en endurance au glissement permanent ou sous fortes charges.

On obtient aussi une répartition plus homogène de la pression de l'huile au sein et en surface du matériau de frottement, en permettant de contrôler le film d'huile qui se forme à la surface 32 du matériau M2 de la garniture de frottement 24 pour maintenir sensiblement constante les performances tribologiques du dispositif.

La conception selon l'invention permet aussi de prolonger les conditions de maintien et de renouvellement du film d'huile à la surface 32 de la garniture de frottement 24 sous l'effet de la compression réversible du matériau qui la constitue qui, lorsqu'il est sollicité, se comporte comme une éponge en relâchant l'huile qu'il contient vers la surface 32.

L'agencement selon l'invention permet aussi de faciliter l'évacuation de l'excès d'huile à la surface 32.

Cet agencement ne modifie pas l'épaisseur utile de la garniture de frottement 24 ni la porosité moyenne de celle-ci, avec un disque de friction à rainures de drainage.

Grâce à l'invention la solidarisation de la garniture de frottement 24 avec son support métallique est accrue.

La ou les rainure(s) formée(s) dans la surface d'interface 22 a par exemple une profondeur axiale comprise entre 10 et 50% de l'épaisseur moyenne de la garniture de frottement, et ceci en fonction du débit d'huile que l'on veut faire circuler dans le canal ainsi formé.

La forme et les dimensions, ainsi que l'orientation, de la rainure ou du réseau de rainures formées dans la surface d'interface 22 sont telles que l'on puisse obtenir des canaux permettant d'alimenter en huile l'intérieur du matériau, et sont telles qu'elles présentent des sections perpendiculaires au sens de cisaillement du matériau lors de l'utilisation du dispositif.

Les rainures peuvent présenter toutes formes simples ou combinées permettant d'obtenir un réseau de drainage efficace.

Outre les deux représentations schématiques données aux figures 1 et 2, les rainures peuvent aussi être par exemple radiales, en spirale, en S, circonférentielles, rectilignes, etc.

D'une manière connue, la surface active de frottement 32 de la garniture de frottement 24 peut elle aussi comporter un réseau de rainures (non représentées).

Outre l'amélioration et le contrôle de la circulation de l'huile, l'invention vise aussi à améliorer la répartition des contraintes et des déformations dans le matériau de frottement.

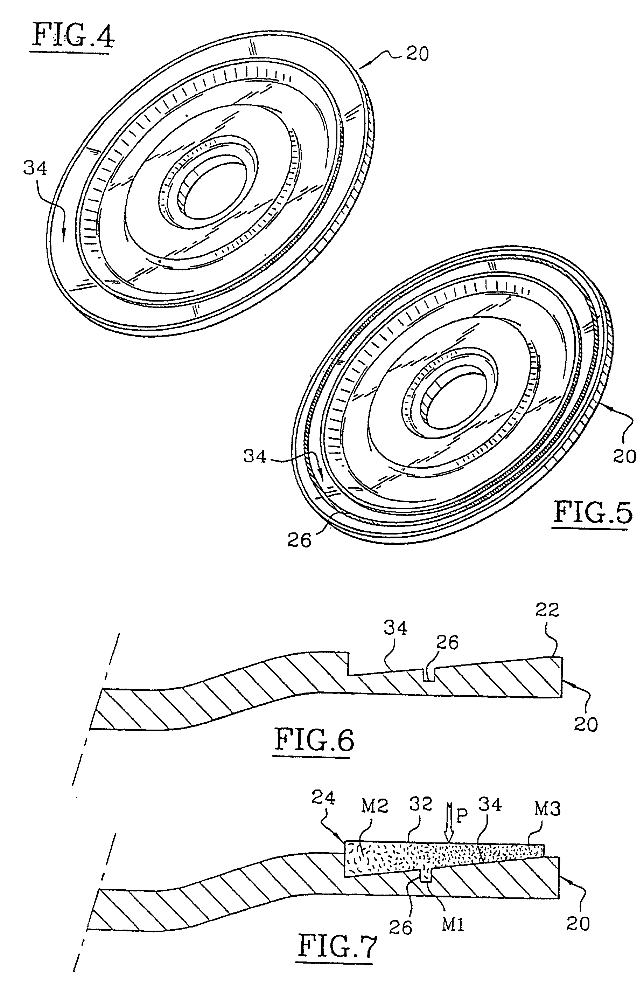

Dans ce but, comme cela est représenté aux figures 4 à 7, on réalise par exemple dans la face latérale annulaire 22 du disque 20 une première rainure 34 de grande largeur, qui est ici une rainure annulaire centrée de profil tronconique avec sa plus grande profondeur axiale située ici radialement vers l'intérieur.

Dans la surface de fond tronconique de la rainure 34, on peut aussi réaliser une rainure de drainage 26 de faible largeur du type de celle mentionnée précédemment en référence aux figures 1 à 3.

Après surmoulage de la garniture de frottement 24, comme on peut le voir à la figure 7, celle-ci présente une densité, et donc une porosité, contrôlée dans ses différentes zones.

Après l'opération de moulage et de cuisson, la garniture de frottement 24 présente toujours une face active de frottement 32 perpendiculaire à l'axe du disque 20 qui est donc parallèle au fond de la rainure 34 constituant ici la surface d'interface sur laquelle est rapportée le matériau de frottement.

Du fait de l'opération de moulage sous pression, la densité du matériau de frottement M3 dans la partie annulaire radialement extérieure de la garniture 24 est supérieure à la densité du matériau M2 dans la partie annulaire radialement intérieure de la garniture, tandis que la densité du matériau M1 reçu dans la rainure de drainage 26 est elle-même inférieure à la densité du matériau M2.

La présence de la rainure de drainage 26 de faible largeur dans le fond de la rainure tronconique 34 procure les avantages mentionnés précédemment.

La modulation de l'épaisseur de la garniture de frottement 24, selon une direction radiale obtenue par la conformation tronconique de la rainure 34 et par la forme du moule aboutissant à la formation de la surface active de frottement 32, permet d'obtenir le contrôle de la densité, et donc de la porosité du matériau de frottement.

De ce fait, on peut donc moduler les propriétés mécaniques, telles que le module d'Young représenté à la figure 14, et le module de Poisson, en fonction des contraintes rencontrées lors de l'utilisation du dispositif.

Le revêtement de matériau de frottement ainsi réalisé présente des caractéristiques mécaniques telles que le champ de contraintes qui est produit lors de l'application d'un effort est plus homogène.

Ceci permet d'améliorer la tenue en endurance des garnitures de frottement fonctionnant dans l'huile.

De plus, la présence de rainures aboutit à former des zones d'embrèvement du matériau de frottement dans le support métallique 20 qui augmente de 10 à 30% sa surface de contact avec le support, et dans une proportion similaire, sa résistance à l'arrachement et au cisaillement.

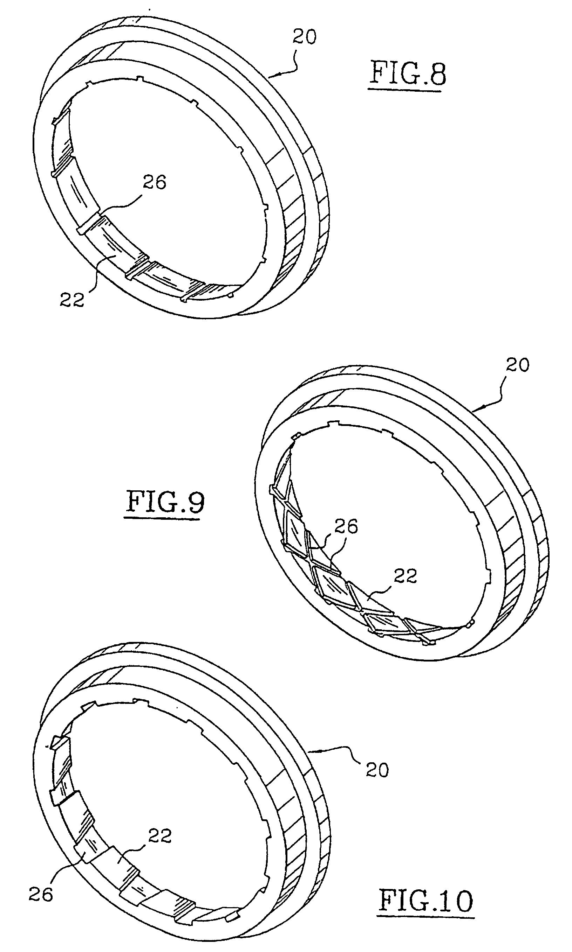

Les principes de l'invention peuvent être aussi appliquées à une bague de synchronisation comme cela est illustré aux figures 8 à 13.

Comme on le voit aux figures 8 à 10, une bague de synchronisation 20 est globalement constituée par un support en forme d'anneau métallique tronconique délimité par une surface latérale interne tronconique 22 qui est par exemple prévue pour recevoir une garniture annulaire plate 24 de matériau de frottement.

Conformément aux enseignements de l'invention, et comme on peut le voir aux figures 7 à 9, il est formé dans la surface tronconique annulaire 22 d'interface un réseau de rainures de drainage 26 ce qui permet une meilleure liaison entre la bague 20 et la garniture 24.

A la figure 8, les rainures 26 sont des rainures rectilignes d'orientation axiale à bords parallèles.

A la figure 9, les rainures 26 sont des rainures non axiales et croisées, tandis qu'à la figure 10, les rainures 26 sont d'orientation axiale, de plus grande largeur et à bords non parallèles.

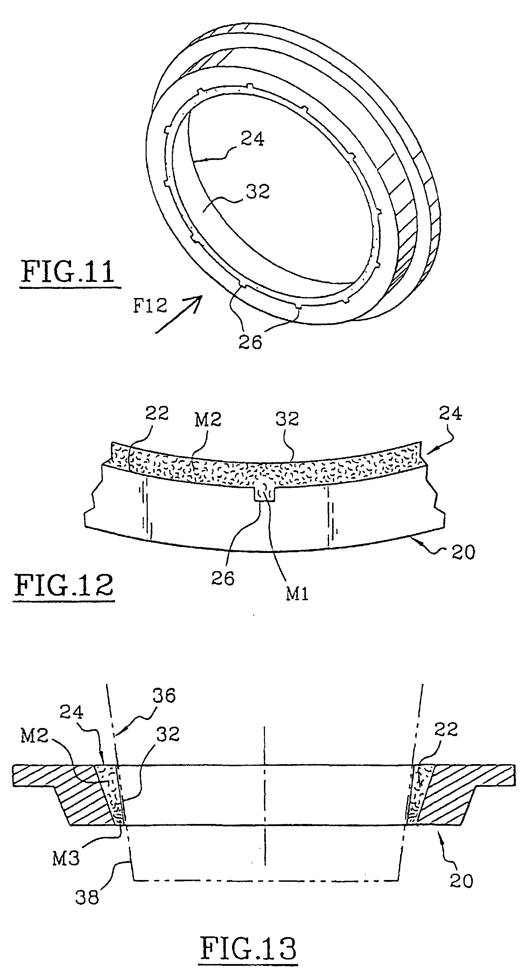

Comme on peut le voir aux figures 10 et 11, la garniture de frottement 24, après son opération de moulage sous pression, pénètre dans les rainures de drainage 26 aboutissant à la formation des zones de matériau M1 et M2 de densités différentes, et donc de porosités différentes.

La surface active de frottement 32 de la garniture de frottement est de forme globalement tronconique et lisse, mais elle peut aussi comporter bien entendu un réseau de rainures (non représentées) de manière connue.

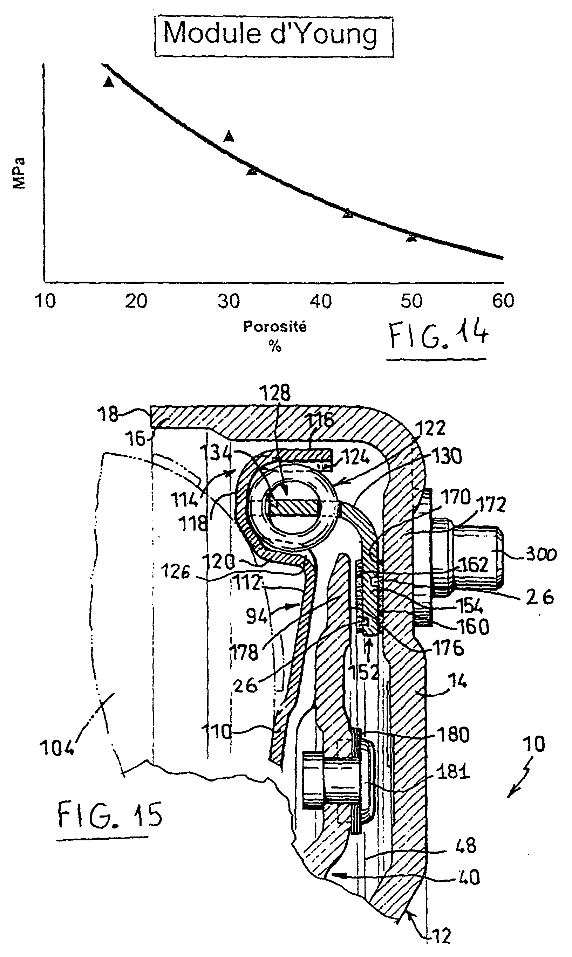

On a représenté sur la figure 13 une conception selon laquelle, après moulage sous pression, la surface active de frottement tronconique 32 n'est pas parallèle à la surface latérale interne d'interface 22.

Cette conception est par exemple obtenue au moyen d'un élément de moule 36 illustré de manière schématique en silhouette dont la surface latérale tronconique externe 38 permet la formation par moulage sous pression d'une garniture 24 à faces latérales non parallèles.

Comme cela était évoqué précédemment en référence aux figures 3 à 6, on peut ainsi réaliser une garniture possédant deux zones de densité croissante M2 et M3.

Selon une variante non représentée, il est bien entendu possible de combiner l'effet de compacités différentes du matériau de frottement avec la présence de rainures de drainage 26 dans la surface d'interface 22.

Les supports 20 qui reçoivent le matériau de frottement sont généralement métalliques et peuvent être obtenus par tout procédé tel que le matriçage, le frittage, le forgeage, la découpe, l'emboutissage, le moulage, ou par usinage par enlèvement de copeaux ou par repoussage.

Les matériaux de frottement qui y sont appliqués par une opération de moulage sous pression sont des matériaux de frottement poreux à cellules ouvertes moulables et se présentent par exemple en bandes d'épaisseur constante avant l'opération de moulage.

D'une manière générale le support 20 est imperméable à l'huile. Il est avantageusement plus rigide que la garniture de frottement.

Bien entendu le support de la garniture de frottement 24 n'est pas forcément le piston du Lock-Up.

Ainsi à la figure 15 le support métallique peut consister en un disque 152 comportant un anneau plat 154 dont les faces planes annulaires et opposées portent chacune une garniture de frottement arrière 160 et avant 162 de manière à constituer un appareil du type «bi-faces ».

La garniture 160 est prévue pour coopérer avec une piste annulaire de frottement 170 formée en vis-à-vis dans là paroi radiale 14 de l'appareil d'accouplement hydrocinétique 10. La paroi 14 porte, de manière connue, des pièces de fixation 300 pour un flasque de liaison de l'appareil 10 à un arbre menant, à savoir le vilebrequin du moteur du véhicule dans le cas d'une application à un véhicule automobile.

La piste 170 est usinée dans une portion 172 d'orientation transversale de la paroi 14.

La garniture de frottement avant 162 est prévue pour coopérer avec une piste annulaire de frottement 176 formée sur la face correspondante de la périphérie externe 178 du piston 40. Le piston 40 est lié en rotation, avec mobilité axiale, à la paroi 14 à l'aide de languettes axialement élastiques 180 fixées par des rivets 181 au piston 40 et par d'autres rivets (non visibles) à la paroi 14 appartenant au carter 12 de l'appareil 10 comportant une roue de turbine 104 et une chambre de commande 48 délimitée par le piston 40 et la paroi 14. Le carter 12 est rempli d'huile, dans laquelle baignent les garnitures 160,162.

De manière connue et tel que visible dans le document US-A-5,566,802, la paroi 14 est prolongée à sa périphérie externe par une jupe 16 dont l'extrémité libre 18 est destinée à être fixée à une coquille solidaire de la roue d'impulseur (non visible) de l'appareil 10. Le disque 152 comporte des pattes d'entraînement 128 raccordées par un coude 130 au corps 154. Chaque patte 128 comporte deux plots 134 de centrage et de maintien d'un ressort 122 formant un tout structurel avec le disque de friction 152. Les ressorts 122 sont montés dans une portion 144 solidaire d'un flasque 94 lié à un moyeu (non visible) solidaire en rotation d'un arbre mené. Le moyeu est solidaire de la roue de turbine 104. La portion 144 est délimitée par des tronçons 116,118,120 délimitant une gorge ouverte axialement en direction de la paroi 14. Les ressorts 122 pénètrent dans la gorge.

Les tronçons 116 et 120 présentent localement des emboutis respectivement 124 et 126 pour appui des extrémités circonférentielles des ressorts 122, ici du type à boudin.

Le flasque 94 est intercalé entre la roue de turbine 104 et le piston 40, tandis que le disque de friction 152, équipé des garnitures 160,162, est intercalé entre le piston 40 et la paroi 14.

Le disque 152 appartient à un embrayage de verrouillage, appelé également embrayage de pontage ou « Lock-Up ».

Dans la figure 15, l'embrayage est désengagé, en sorte que le carter 12 est lié en rotation au moyeu de l'appareil par l'intermédiaire de la roue de turbine 104 entraîné en rotation par la circulation d'huile provoquée par la roue d'impulseur (non visible).

En faisant varier la pression hydraulique dans la chambre 48, le piston 40 vient serrer les garnitures de frottement 160, 162, en sorte que le couple est transmis directement du carter 12 au moyeu via le disque 152, les ressorts 122 et le flasque 94.

Pour plus de précisions, on se reportera au document FR98 02 808 déposé le 3 mars 1998 et publié sous le numéro 2 775 747.

Le disque 152 équipé des garnitures 160,162 est donc un disque d'embrayage.

Ainsi qu'on l'aura compris, les rainures de drainage 26 sont réalisées sur chacune des faces de l'anneau plat métallique 154 du disque de friction 152.

La matière des garnitures de frottement 162,160 moulées sous pression s'étend donc dans les rainures 26 pour constituer des zones de porosité contrôlée supérieure à la porosité moyenne du corps desdites garnitures 160,162.

On appréciera qu'il n'est pas besoin de prévoir plusieurs rainures par faces, puisque l'anneau 154 est doté d'une rainure sur chacune de ses faces. Les rainures peuvent avoir celles des figures 1 et 2.

Bien entendu en variante les garnitures 160,162 peuvent. être fixées respectivement sur la portion 172 de la paroi 14, globalement d'orientation transversale, et sur la périphérie externe 178 du piston 40.

Les rainures peuvent donc être réalisées également dans la paroi 14. Dans tous les cas l'anneau 154 est destiné à être serré entre le piston 40 et la paroi 14.

On appréciera que la formation des rainures 26 dans l'anneau 154 est favorable car celui-ci est mois épais.

Les rainures 26 sont donc plus facilement réalisables par emboutissage.

Dans les figures 1 à 7 le piston 20 appartient à un embrayage de verrouillage monoface en sorte que la garniture de frottement est prévue pour venir en contact avec la portion 172 de la paroi, l'ensemble piston 20 - garniture 24 formant alors le disque d'embrayage.

On peut transformer l'embrayage «bi-faces» de la figure 15 en embrayage monoface. Ainsi on peut fixer l'anneau 154 par rivetage sur le piston 40, plus précisément sur la face de celui-ci tournée vers le flasque 94 et fixer la garniture 162 sur le piston 40 comme dans les figures 1 à 7, la garniture 160 étant alors supprimée.

Dans ce type de réalisation le piston n'est plus lié en rotation à la roue de turbine.

En variante la portion 114 est fixée directement par exemple par soudage ou agrafage sur la paroi externe de la roue de turbine 104.

Dans ce cas le flasque 94 est supprimé.

On peut lier en rotation les pattes 128 directement à une couronne, solidaire de l'un des éléments roue de turbine 104 - moyeu.

Par exemple la couronne est soudée sur la roue de turbine, les pattes 128 pénétrant dans des mortaises de la couronne pour une liaison en rotation par coopération de formes.

La roue de turbine 104 étant solidaire du moyeu, dans tous les cas le disque de friction 152,160,162 ou l'ensemble piston 20 - garniture 24 est propre à être lié en rotation de manière débrayable à la paroi 14 du carter 12.

Bien entendu plusieurs disques de friction peuvent être prévus comme décrit dans le document US-A-5,566,802 montrant le moyeu de l'appareil.

Pour mémoire on rappellera qu'une bague de synchronisation est destinée dans les boîtes de vitesses de véhicules automobiles, à synchroniser le changement de rapport de la boîte de vitesses. La boîte de vitesses est remplie d'huile et des bagues de synchronisation sont montées dans celles-ci.

Plus précisément deux bagues de synchronisation sont montées de part et d'autre d'un corps de synchronisation cannelé intérieurement pour sa liaison à un arbre, l'ensemble corps de synchronisation - bague étant intercalé entre deux pignons de la boîte de vitesses.

Un manchon baladeur est monté sur le corps de synchronisation et engrène avec celui-ci en étant soumis à l'action d'une fourchette permettant de déplacer le manchon baladeur axialement dans un sens ou dans l'autre pour venir en prise avec les dents (non visibles dans les figures 8 à 13), que présente la bague 20 à sa périphérie externe au niveau de son rebord radial.

La bague 20 par son cône intérieur vient ainsi en prise avec un cône externe d'une pièce d'embrayage associée au pignon concerné. Pour plus de précisions on se reportera par exemple aux documents EP-A-0 717 212 et DE-A-37 35 978.

## Revendications

1. Dispositif mettant en oeuvre un frottement en milieu liquide tel que, plus particulièrement, un disque d'embrayage ou de frein, notamment de boîte de vitesses automatique ou y associé, ou tel qu'un anneau ou cône de synchronisation de boîte de vitesses, du type comportant un support (20) imperméable au liquide, notamment métallique, dont une surface d'interface (22) forme support pour une garniture de frottement (24), réalisée à partir d'un matériau de frottement qui présente une structure poreuse à cellules communicantes et qui comporte des zones (M1, M2, M3) de porosités différentes et contrôlées, et du type dans lequel le procédé de fabrication de la garniture de frottement comporte une étape de moulage sous pression, **caractérisé en ce que** la surface d'interface (22) du support (20) comporte au moins une rainure (26, 34) dans laquelle s'étend le matériau de frottement moulé sous pression pour constituer une zone de porosité contrôlée (M1, M2) supérieure à la porosité moyenne (M2, M3) du corps en matériau de frottement constituant la garniture (24), notamment pour former un canal (26) de circulation de l'huile à l'intérieur de la garniture de frottement (24).

2. Dispositif selon la revendication 1, **caractérisé en ce que** la rainure (26) est fermée en boucle.

3. Dispositif selon la revendication 2, **caractérisé en ce que** la rainure (26) est constituée par une rainure circulaire fermée et excentrée par rapport à la surface d'interface (22).

4. Dispositif selon la revendication 1, **caractérisé en ce que** la rainure (26) débouche radialement vers l'intérieur et vers l'extérieur par ses extrémités (28,30).

5. Dispositif selon l'une quelconque des revendications 1 à 4, **caractérisé en ce que** plusieurs rainures (26) sont prévues.

6. Dispositif selon l'une quelconque des revendications précédentes, **caractérisé en ce que** la profondeur moyenne de la rainure (26) est comprise entre 10% et 50% de l'épaisseur moyenne de la garniture.

7. Dispositif selon l'une quelconque des revendications précédentes, **caractérisé en ce que** la rainure (26) est telle qu'elle présente une section, transversale à sa direction générale, qui est perpendiculaire au sens de cisaillement du matériau de frottement lors de l'utilisation du dispositif.

8. Dispositif selon l'une quelconque des revendications précédentes, **caractérisé en ce que** au moins une partie (34) de la surface d'interface n'est pas parallèle à la surface active (32) de frottement de la garniture (24).

9. Dispositif selon la revendication précédente, **caractérisé en ce que** le support (20) est globalement en forme d'anneau plat, **en ce que** la surface d'interface est de profil tronconique (34), et **en ce que** la surface active de frottement (32) n'est pas parallèle à la surface d'interface tronconique de manière à constituer une zone annulaire de porosité contrôlée (M3) inférieure à la porosité moyenne (M2) du corps en matériau de frottement constituant la garniture (24).

10. Dispositif selon la revendication précédente, **caractérisé en ce que** la surface d'interface (34) est constituée par le fond d'une rainure annulaire de grande largeur (34) formée dans une face latérale du support annulaire plat.

11. Dispositif selon l'une des revendications 9 ou 10, **caractérisé en ce que** la surface d'interface tronconique (34) comporte au moins une rainure de faible largeur (26) dans laquelle s'étend le matériau de frottement (M1) moulé sous pression.

12. Dispositif selon l'une quelconque des revendications précédentes, **caractérisé en ce que** le matériau de frottement est constitué par un mat de fibres imprégné d'une résine thermodurcissable.

13. Dispositif selon l'une quelconque des revendications précédentes, **caractérisé en ce que** la taille des cellules communicantes est comprise entre 50 et 500 micromètres.

14. Dispositif selon l'une quelconque des revendications précédentes, **caractérisé en ce que** la porosité du matériau de frottement est inférieure à 60%.

15. Dispositif selon l'une quelconque des revendications précédentes, **caractérisé en ce que** la surface active (32) de frottement de la garniture (24) comporte un réseau de rainures permettant une meilleure circulation de l'huile entre la garniture de frottement et une surface de réaction avec laquelle coopère le dispositif.

16. Dispositif selon l'une quelconque des revendications précédentes, **caractérisé en ce que** la rainure (26) est réalisé dans le piston (20) d'un appareil d'accouplement hydrocinétique (10).

17. Dispositif selon l'une quelconque des revendications 1 à 15, **caractérisé en ce qu'**au moins une rainure est réalisée sur chacune des faces d'un disque de friction (15) appartenant à un appareil d'accouplement hydrocinétique du type «bi-faces».

18. Dispositif selon l'une quelconque des revendications 1 à 15, **caractérisé en ce que** la rainure est formée dans la surface interne tronconique d'une bague de synchronisation d'une boîte de vitesses.

## Patentansprüche

1. Vorrichtung, die mit Reibung in einem flüssigem Medium arbeitet, etwa insbesondere eine Kupplungs- oder Bremsscheibe, vor allem für ein Automatikgetriebe oder damit verbunden, oder etwa ein Synchronring oder ein Synchronkegel eines Getriebes, umfassend einen für die Flüssigkeit undurchlässigen Träger (20), insbesondere aus Metall, von dem eine Grenzfläche (22) einen Träger für einen Reibbelag (24) bildet, der aus einem Reibwerkstoff ausgeführt ist, der eine poröse Struktur mit zusammenhängenden Zellen aufweist und der Bereiche (M1, M2, M3) mit unterschiedlichen und kontrollierten Porositäten enthält, wobei das Verfahren zur Herstellung des Reibbelags einen Druckformvorgang umfasst, **dadurch gekennzeichnet, dass** die Grenzfläche (22) des Trägers (20) wenigstens eine Nut (26, 34) enthält, in der sich der druckgeformte Reibwerkstoff erstreckt, um einen Bereich mit kontrollierter Porosität (M1, M2) zu bilden, die größer als die mittlere Porosität (M2, M3) des den Reibbelag (24) bildenden Körpers aus Reibwerkstoff ist, insbesondere um einen Kanal (26) für die Zirkulation des Öls im Innern des Reibbelags (24) zu schaffen.

2. Vorrichtung nach Anspruch 1, **dadurch gekennzeichnet, dass** die Nut (26) schleifenförmig in sich geschlossen ist.

3. Vorrichtung nach Anspruch 2, **dadurch gekennzeichnet, dass** die Nut (26) aus einer geschlossenen und bezogen auf die Grenzfläche (22) außermittig versetzten Nut besteht.

4. Vorrichtung nach Anspruch 1, **dadurch gekennzeichnet, dass** die Nut (26) durch ihre Enden (28, 30) radial nach innen und nach außen mündet.

5. Vorrichtung nach einem der Ansprüche 1 bis 4, **dadurch gekennzeichnet, dass** mehrere Nuten (26) vorgesehen sind.

6. Vorrichtung nach einem der vorangehenden Ansprüche, **dadurch gekennzeichnet, dass** die mittlere Tiefe der Nut (26) zwischen 10% und 50% der mittleren Dicke des Reibbelags liegt.

7. Vorrichtung nach einem der vorangehenden Ansprüche, **dadurch gekennzeichnet, dass** die Nut (26) so beschaffen ist, dass sie einen, quer zu ihrer Gesamtrichtung angeordneten, Querschnitt aufweist, der senkrecht zur Scherrichtung des Reibwerkstoffs bei der Benutzung der Vorrichtung verläuft.

8. Vorrichtung nach einem der vorangehenden Ansprüche, **dadurch gekennzeichnet, dass** wenigstens ein Teil (34) der Grenzfläche nicht parallel zur Reibwirkfläche (32) des Reibbelags (24) verläuft.

9. Vorrichtung nach dem vorangehenden Anspruch, **dadurch gekennzeichnet, dass** der Träger (20) insgesamt in Form eines flachen Rings ausgeführt ist, dass die Grenzfläche ein kegelstumpfartiges Profil (34) aufweist und dass die Reibwirkfläche (32) nicht parallel zur kegelstumpfartigen Grenzfläche verläuft, um einen ringförmigen Bereich mit kontrollierter Porosität (M3) zu bilden, die kleiner als die mittlere Porosität (M2) des den Reibbelag (24) bildenden Körpers aus Reibwerkstoff ist.

10. Vorrichtung nach dem vorangehenden Anspruch, **dadurch gekennzeichnet, dass** die Grenzfläche (34) aus dem Boden einer ringförmigen Nut mit großer Breite (34) besteht, die in einer Seitenfläche des flachen ringförmigen Trägers ausgebildet ist.

11. Vorrichtung nach einem der Ansprüche 9 oder 10, **dadurch gekennzeichnet, dass** die kegelstumpfartige Grenzfläche (34) wenigstens eine Nut mit geringer Breite (26) enthält, in der sich der druckgeformte Reibwerkstoff (M1) erstreckt.

12. Vorrichtung nach einem der vorangehenden Ansprüche, **dadurch gekennzeichnet, dass** der Reibwerkstoff aus einer mit einem Duroplast imprägnierten Fasermatte besteht.

13. Vorrichtung nach einem der vorangehenden Ansprüche, **dadurch gekennzeichnet, dass** die Größe der zusammenhängenden Zellen zwischen 50 und 500 Mikrometer liegt.

14. Vorrichtung nach einem der vorangehenden Ansprüche, **dadurch gekennzeichnet, dass** die Porosität des Reibwerkstoffs kleiner als 60% ist.

15. Vorrichtung nach einem der vorangehenden Ansprüche, **dadurch gekennzeichnet, dass** die Reibwirkfläche (32) des Reibbelags (24) ein Netz von Nuten enthält, das eine bessere Zirkulation des Öls zwischen dem Reibbelag und einer Gegenanpressfläche ermöglicht, mit der die Vorrichtung zusammenwirkt.

16. Vorrichtung nach einem der vorangehenden Ansprüche, **dadurch gekennzeichnet, dass** die Nut (26) im Kolben (20) eines hydrodynamischen Momentwandlers (10) ausgeführt ist.

17. Vorrichtung nach einem der Ansprüche 1 bis 15, **dadurch gekennzeichnet, dass** wenigstens eine Nut auf jeder der Flächen einer Reibungskupplungsscheibe (15) ausgeführt ist, die zu einem hydrodynamischen Momentwandler in "zweiflächiger" Bauart gehört.

18. Vorrichtung nach einem der Ansprüche 1 bis 15, **dadurch gekennzeichnet, dass** die Nut in der kegelstumpfartigen Innenfläche eines Synchronrings eines Getriebes ausgeführt ist.

## Claims

1. Device using friction in a liquid medium such as, in particular, a clutch or brake disc, especially for an automatic gearbox or associated therewith, or such as a gearbox synchronisation ring or cone, of the type comprising a support (20) impermeable to the liquid, in particular metallic, an interface surface (22) of which forms a support for a friction lining (24), produced from a friction material which has a porous structure with communicating cells and which comprises areas (M1, M2, M3) with different controlled porosities, and of the type in which the method of manufacturing the friction lining comprises a pressurised moulding step, **characterised in that** the interface surface (22) of the support (20) comprises at least one groove (26, 34) in which the friction material moulded under pressure extends in order to constitute an area of controlled porosity (M1, M2) greater than the mean porosity (M2, M3) of the body made from friction material constituting the lining (24), in particular in order to form an oil circulation channel (26) within the friction lining (24).

2. Device according to Claim 1, **characterised in that** the groove (26) is closed in a loop.

3. Device according to Claim 2, **characterised in that** the groove (26) consists of a closed circular groove which is off centre with respect to the interface surface (22).

4. Device according to Claim 1, **characterised in that** the groove (26) opens out radially towards the inside and outside through its ends (28, 30).

5. Device according to any one of Claims 1 to 4, **characterised in that** several grooves (26) are provided.

6. Device according to any one of the preceding claims, **characterised in that** the mean depth of the groove (26) is between 10% and 50% of the mean thickness of the lining.

7. Device according to any one of the preceding claims, **characterised in that** the groove (26) is such that it has a section, transverse to its general direction, which is perpendicular to the direction of shearing of the friction material during use of the device.

8. Device according to any one of the preceding claims, **characterised in that** at least part (34) of the interface surface is not parallel to the active friction surface (32) of the lining (24).

9. Device according to the preceding claim, **characterised in that** the support (20) is overall in the form of a flat ring, **in that** the interface surface has a frustoconical profile (34), and **in that** the active friction surface (32) is not parallel to the frustoconical interface surface so as to constitute an annular area with controlled porosity (M3) less than the mean porosity (M2) of the body made from friction material constituting the lining (24).

10. Device according to the preceding claim, **characterised in that** the interface surface (24) consists of the bottom of a very wide annular groove (34) formed in a lateral face of the flat annular support.

11. Device according to one of Claims 8 or 9, **characterised in that** the frustoconical interface surface (24) comprises at least one narrow groove (26) in which the friction material (M1) moulded under pressure extends.

12. Device according to any one of the preceding claims, **characterised in that** the friction material consists of a mat of fibres impregnated with a thermosetting resin.

13. Device according to any one of the preceding claims, **characterised in that** the size of the communicating cells is between 50 and 500 micrometres.

14. Device according to any one of the preceding claims, **characterised in that** the porosity of the friction material is less than 60%.

15. Device according to any one of the preceding claims, **characterised in that** the active friction surface (32) of the lining (24) comprises a network of grooves allowing better circulation of oil between the friction lining and a reaction surface with which the device cooperates.

16. Device according to any one of the preceding claims, **characterised in that** the groove (26) is produced in the piston (20) of a hydrokinetic coupling apparatus (10).

17. Device according to any one of Claims 1 to 15, **characterised in that** at least one groove is produced on each of the faces of a friction disc (15) belonging to a hydrokinetic coupling apparatus of the "dual face" type.

18. Device according to any one of Claims 1 to 15, **characterised in that** the groove is formed in the frustoconical internal surface of a gearbox synchronisation ring.
